# EUROPEAN PATENT APPLICATION

(11) **EP 3 428 903 A1**
(43) Date of publication of application: **16.01.2019**
(21) Application number: 18182993.8
(22) Date of filing: 11.07.2018
(51) Int. Cl.: G08G 5/00, G08G 5/02

(54) **COCKPIT DISPLAY OF TRAFFIC INFORMATION (CDTI) ASSISTED VISUAL SEPARATION EMPLOYING A VERTICAL SITUATION DISPLAY**

(30) Priority: 12.07.2017 US 201715647471
(71) Applicant: Honeywell International Inc., Morris Plains, NJ New Jersey 07950 (US)
(72) Inventor: KHATWA, Ratan, Morris Plains, NJ 07950 (US); ZIARNICK, Melissa, Morris Plains, NJ 07950 (US); TREFILOVA, Helena, Morris Plains, NJ 07950 (US); KIANG, Pavel, Morris Plains, NJ 07950 (US); WHITLOW, Stephen, Morris Plains, NJ 07950 (US)
(74) Representative: Houghton, Mark Phillip

(57) **Abstract**

Systems and methods directed to improvements in the presentation of CAVS procedures on an aircraft display system over what is conventionally available are provided. The provided systems and methods employ a vertical situation display (VSD), thereby presenting additional relevant visual approach information, such as a vertical distance between the ownship and the target aircraft, descent rates of the ownship and the target and an alerting function for the user-selected CAVS range. The provided systems and methods also capably receive and process user selections of target aircraft from both the lateral display and the VSD.

## Description

### TECHNICAL FIELD

The technical field generally relates to aircraft safety and notification systems, and more particularly relates to systems and related operating methods for employing a Vertical Situation Display (VSD) in Cockpit Display of Traffic Information (CDTI) assisted visual separation.

### BACKGROUND

The phase of flight prior to landing an aircraft is referred to as "approach," requiring an approach procedure. Approach procedures at a crowded landing situation may involve multiple aircraft lining up sequentially and following each other (in a manner often referred to as "in-trail"), at the direction of Air Traffic Control (ATC). Approach procedures may be instrument based or visual. A visual approach requires the pilot of an ownship to be able to see, out-the-window of the ownship, another "target" aircraft, and follow it, for at least a portion of the approach procedure, perhaps until the target aircraft lands. In undertaking a visual approach, the pilot accepts responsibility to maintain, until landing, an ATC designated visual in-trail "separation distance" between the ownship and the target aircraft, and the weather conditions must be suitable for visibility.

In low visibility instances, a pilot may intermittently lose his out-the-window view of the target aircraft. In those instances, the pilot may additionally rely on a Cockpit Display of Traffic Information (CDTI) to track the target aircraft and maintain the designated separation distance, thereby being able to maintain or not abandon the visual approach. In support of this, procedures for CDTI Assisted Visual Separation (CAVS) have been developed. Conventionally, the CDTI is displayed as a top down view on a lateral, or navigation, display on an aircraft display system. As may be readily understood, the presentation of CAVS information in a top down view either completely omits or ineffectively conveys a variety of relevant vertical visual approach information.

Accordingly, systems and methods directed to improvements in the presentation of CAVS procedures on an aircraft display system over what is conventionally available are desirable. The desirable systems and methods employ a vertical display, thereby providing additional relevant visual approach information, such as a vertical distance between the ownship and the target aircraft, and descent rates of the ownship and the target aircraft. The following disclosure provides these technological enhancements over conventional CAVS procedures, in addition to addressing related issues.

### BRIEF SUMMARY

This summary is provided to describe select concepts in a simplified form that are further described in the Detailed Description. This summary is not intended to identify key or essential features of the claimed subject matter, nor is it intended to be used as an aid in determining the scope of the claimed subject matter.2

In accordance with an embodiment, a Cockpit Display of Traffic Information (CDTI) assisted Visual Separation (CAVS) System is provided. The CAVS system comprising: a lateral display; a vertical situation display (VSD); and a control module coupled to the lateral display and the VSD, the control module comprising a processor and a memory device, and configured to: (a) identify neighbor traffic based on traffic data received from an automatic dependent surveillance broadcast (ADS-B), (b) command the lateral display to render a lateral image and the VSD to render a vertical image, each image comprising the neighbor traffic and features associated with a cockpit display of traffic information (CDTI) Assisted Visual Separation (CAVS) application, (c) receive a user selected traffic subsequent to (b), and, (d) responsive to (c), command the lateral display and the VSD to concurrently, update the lateral image and the vertical image to (i) visually distinguish the user selected traffic from remaining neighbor traffic, and (ii) depict a user selected range distance.

Also provided is a method for Cockpit Display of Traffic Information (CDTI) assisted Visual Separation (CAVS), comprising: at a control module, (a) identifying neighbor traffic; (b) filtering the neighbor traffic with a predetermined data quality criteria; (c) commanding a vertical situation display (VSD) to render filtered traffic in a visually distinct manner with respect to remaining neighbor traffic in a vertical image; (d) concurrently with (c), commanding a lateral display to render neighbor traffic in a lateral image; (e) receiving a user selected traffic from the VSD subsequent to (d); and, (f) responsive to (e), commanding the lateral display and the VSD to concurrently visually distinguish the user selected traffic from remaining neighbor traffic.

In accordance with another embodiment, a Cockpit Display of Traffic Information (CDTI) assisted visual separation (CAVS) system on an ownship is provided. The CAVS system comprising: a lateral display; a vertical situation display (VSD); and a control module coupled to the lateral display and the VSD, the control module comprising a processor and a memory device, and configured to: (a) process traffic data received to identify neighbor traffic; (b) filter the neighbor traffic with a predetermined data quality criteria; (c) command the lateral display to render an image comprising the neighbor traffic; (d) command a vertical situation display (VSD) to render filtered traffic in a visually distinct manner with respect to remaining neighbor traffic; (e) receive a user selected traffic subsequent to (d), and, (f) responsive to (e), command the lateral display and the VSD to concurrently, update the lateral image and the vertical image to (i) visually distinguish the user selected traffic from remaining neighbor traffic, and (ii) depict a user selected range distance.

Furthermore, other desirable features and characteristics of the system and method will become apparent from the subsequent detailed description and the appended claims, taken in conjunction with the accompanying drawings and the preceding background.

### BRIEF DESCRIPTION OF THE DRAWINGS

The present application will hereinafter be described in conjunction with the following drawing figures, wherein like numerals denote like elements, and:
FIG. 1 is a functional block diagram illustrating a CAVS Vertical Situation Display (VSD) system, in accordance with various exemplary embodiments;
FIG. 2 is a two dimensional display system image showing neighbor traffic displayed on a VSD, in accordance with various exemplary embodiments;
FIG. 3 is the display system image of FIG. 2, showing a user selected traffic on the VSD, in accordance with various exemplary embodiments;
FIG. 4 is the display system image of FIG. 3, showing CAVS selected by a user, in accordance with various exemplary embodiments;
FIG. 5 is the display system image of FIG. 4, showing a user selected CAVS range distance, in accordance with various exemplary embodiments;
FIG. 6 is the display system image of FIG. 5, showing an optional removal of the display of other traffic targets, in accordance with various exemplary embodiments;
FIG. 7 is the display system image of FIG. 6, showing a first visual range alert, in accordance with various exemplary embodiments;
FIG. 8 is the display system image of FIG. 7, showing a second visual range alert, in accordance with various exemplary embodiments;
FIG. 9 is the display system image of FIG. 8, showing a third visual alert, associated with the ownship entering the TCAS protection zone, in accordance with various exemplary embodiments; and
FIG. 10 is a flow chart describing a method for a CAVS VSD system, in accordance with various exemplary embodiments.

### DETAILED DESCRIPTION

The following detailed description is merely illustrative in nature and is not intended to limit the embodiments of the subject matter or the application and uses of such embodiments. As used herein, the word "exemplary" means "serving as an example, instance, or illustration." Thus, any embodiment described herein as "exemplary" is not necessarily to be construed as preferred or advantageous over other embodiments. All of the embodiments described herein are exemplary embodiments provided to enable persons skilled in the art to make or use the invention and not to limit the scope of the invention that is defined by the claims. Furthermore, there is no intention to be bound by any expressed or implied theory presented in the preceding technical field, background, brief summary, or the following detailed description.

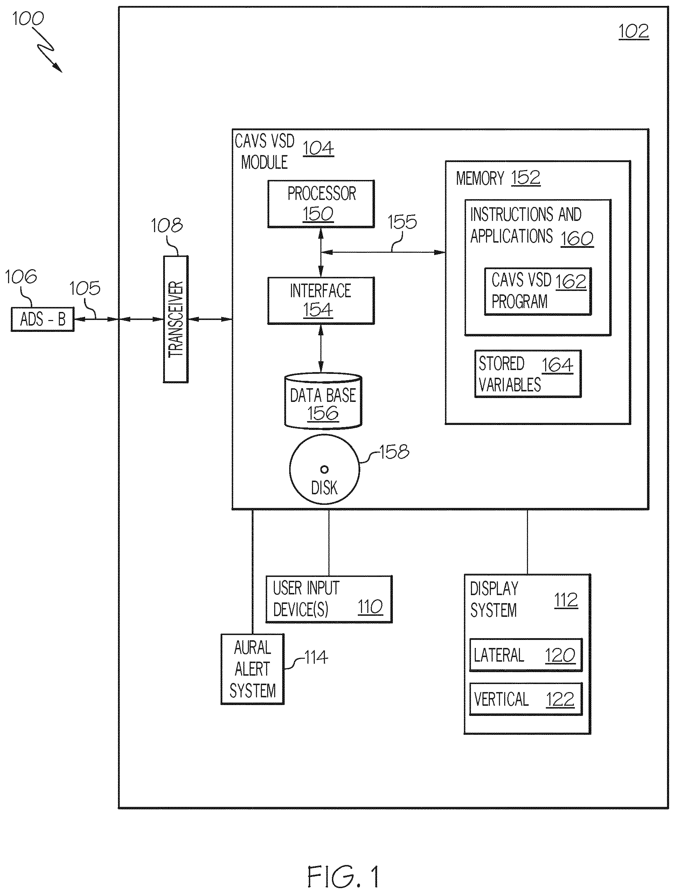

As used herein, the term module refers to any hardware, software, firmware, electronic control component, processing logic, and/or processor device, individually or in any combination, including without limitation: application specific integrated circuit (ASIC), an electronic circuit, a processor (shared, dedicated, or group) and memory that executes one or more software or firmware programs, a combinational logic circuit, and/or other suitable components that provide the described functionality. The provided system and method may take the form of a CAVS VSD module (FIG. 1, **104**), and may be separate from, or integrated within, a preexisting mobile platform management system or aircraft flight management system (FMS).

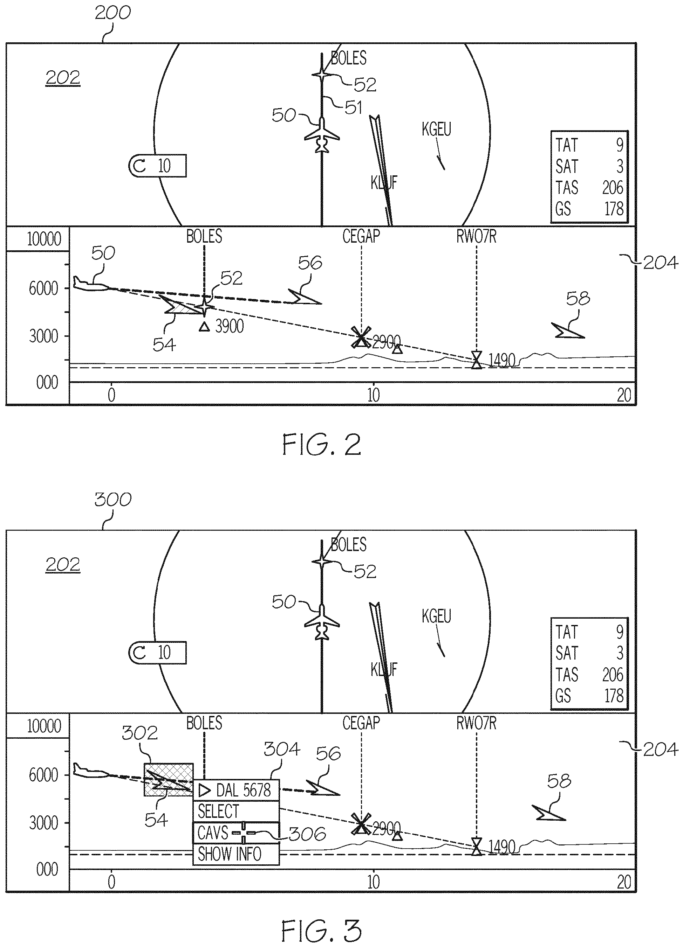

The disclosed control module provides an enhancement over conventional CDTI Assisted Visual Separation systems, in part, by integrating CAVS procedures on both a vertical situation display (VSD) and a lateral display on an aircraft display system. As used herein, the control module is the CAVS VSD module (FIG. 1, **104**). In operation, the CAVS VSD module **104** displays neighbor traffic on both a lateral display image (FIG. 2-9, **202**) and a vertical display image (FIGS. 2-9, **204**), responds to user selections of traffic on either of the displays (FIG. 1, **120, 122**) the user selections occurring subsequent to the displaying of the neighbor traffic, and updates both displays concurrently. The below description provides more detail as to these functions. In addition, the disclosed CAVS VSD module **104** filters the received neighbor traffic data (for example, Automatic Dependent Surveillance-Broadcast (ADS-B) data) and does not allow selection of neighbor traffic that do not meet predetermined data quality criteria.

Turning now to FIG. 1, a functional block diagram **100** of a CAVS VSD system **102** is depicted, in accordance with various exemplary embodiments. Although the depicted CAVS VSD system **102** is generally realized within an aircraft, the concepts presented here can be deployed in a variety of mobile platforms, such as vehicles, spacecraft, watercraft, and the like. In the depicted embodiment, the CAVS VSD system **102** includes: the control module (CAVS VSD module **104**) that is electronically coupled to a user input device **110,** a display system **112,** and an aural alert system **114.** In addition, the CAVS VSD module **104** receives via transceiver **108,** wireless signals **105** comprising traffic data. In various embodiments, the traffic data is provided from an ADS-B source **106.** The operation of these functional blocks is described in more detail below.

Neighbor traffic are understood to have appropriate ADS-B out capability, such that the ADS-B source **106** may provide reliable traffic data. In the depicted embodiment, the CAVS VSD module **104** processes traffic data received from the ADS-B source **106** and identifies neighbor traffic therein. The CAVS VSD module **104** commands the display system **112** to render images comprising the neighbor traffic and other features associated with a cockpit display of traffic information (CDTI) for a pilot to review. In various embodiments, the CAVS VSD module **104** filters the ADS-B data with one or more predetermined data quality criteria, generating therefrom a subset of the neighbor traffic in the ADS-B data, referred to herein as filtered data. The CAVS VSD module **104** may then command a vertical situation display, VSD **122,** to display the filtered data in a visually distinct manner with respect to the remaining neighbor traffic, and may limit a pilot's selection on the VSD **122** to only neighbor traffic within the filtered traffic subset. Doing so provides a technical benefit of, when selected via the VSD **122,** ensuring that the pilot's neighbor traffic selection meets the increased data quality criteria. The pilot may rely on various aspects of this displayed traffic data in the course of operating an aircraft.

In some embodiments, wireless signals **105** comprise wireless signal from other wireless sources of data. For example, wireless signals **105** may be provided by a datalink and air traffic control (ATC) system, an electronic flight bag (EFB)/electronic ground proximity warning system (EGPWS), a traffic collision and avoidance system (TCAS), a weather information system, and other systems as conventionally known to persons of skill in the art.

The transceiver **108** enables the CAVS VSD module **104** to establish and maintain the communications links to onboard components (not shown), and the ADS-B source **106.** The transceiver **108** may include at least one receiver and at least one transmitter that are operatively coupled to the CAVS VSD module **104.** The transceiver **108** can support wired and a variety of types of wireless communication, and can perform signal processing (e.g., digitizing, data encoding, modulation, etc.) as is known in the art. In some embodiments, the transceiver **108** is integrated with the CAVS VSD module **104.**

In various embodiments, the user input device **110** may include any one, or combination, of various known user input device devices including, but not limited to: a touch sensitive screen; a cursor control device (CCD) (not shown), such as a mouse, a trackball, or joystick; a keyboard; one or more buttons, switches, or knobs; a voice input system; and a gesture recognition system. Non-limiting examples of uses for the user input device **110** include: entering values for stored variables **164,** loading or updating instructions and applications **160,** and loading and updating the contents of the database **156,** each described in more detail below.

As depicted in FIG.1, the display system **112** may be an integration of two components, a lateral display **120** and VSD **122.** FIGS. 2-9 show various views of images on an integrated lateral display **120** (also referred to as a navigation display) and vertical situation display, VSD **122.** The display system **112** components may be implemented using any one of numerous known display devices suitable for rendering textual, graphic, and/or iconic information in a format viewable by a user. The display devices may provide three dimensional or two dimensional images, and may provide synthetic vision imaging. Non-limiting examples of such display devices include cathode ray tube (CRT) displays, and flat panel displays such as LCD (liquid crystal displays) and TFT (thin film transistor) displays. Accordingly, each display device responds to a communication protocol that is either two-dimensional or three, and may support the overlay of text, alphanumeric information, or visual symbology. The various display device(s) 112 may each, individually, be responsive to user input via user input device(s) 110 and/or be under the control of the CAVS VSD module **104.**

The aural alert system **114** may comprise any combination of speakers, bells, or alarms sufficient to generate sound that the pilot can hear. The aural alert system **114** may receive commands from the CAVS VSD module **104** and convert the commands into emitted sounds. Accordingly, the aural alert system **114** may comprise a means for converting the commands into emitted sounds.

The CAVS VSD module **104** performs the functions of the CAVS VSD system **102.** With continued reference to FIG. 1, within the CAVS VSD module **104,** the processor **150** and the memory **152** form a CAVS VSD engine that performs the processing activities. The CAVS VSD engine provides a technological improvement to the conventional display of CAVS information, in part, by providing a more comprehensive representation of the vertical separation between an ownship and a designated traffic, and visual and aural alerting when in-trail separation is compromised. The above described CAVS VSD engine performs the processing activities in accordance with the CAVS VSD program **162,** as is described in more detail below.

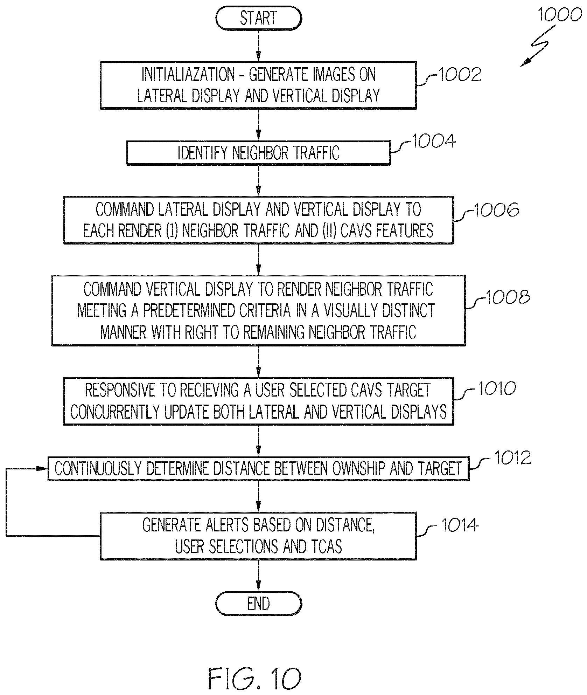

The CAVS VSD module **104** also includes an interface **154,** communicatively coupled to the processor **150** and memory **152** (via a bus **155**), database **156,** and an optional storage disk **158.** In various embodiments, the CAVS VSD module **104** performs actions and other functions in accordance with steps of a method **1000** described in connection with FIG. 10. The processor **150** may comprise any type of processor or multiple processors, single integrated circuits such as a microprocessor, or any suitable number of integrated circuit devices and/or circuit boards working in cooperation to carry out the described operations, tasks, and functions by manipulating electrical signals representing data bits at memory locations in the system memory, as well as other processing of signals.

A computer readable storage medium, such as a memory **152,** the database **156,** or a disk **158** may be utilized as both storage and a scratch pad. The memory locations where data bits are maintained are physical locations that have particular electrical, magnetic, optical, or organic properties corresponding to the data bits. The memory **152** can be any type of suitable computer readable storage medium. For example, the memory **152** may include various types of dynamic random access memory (DRAM) such as SDRAM, the various types of static RAM (SRAM), and the various types of non-volatile memory (PROM, EPROM, and flash). In certain examples, the memory **152** is located on and/or co-located on the same computer chip as the processor **150.** In the depicted embodiment, the memory **152** stores the above-referenced instructions and applications **160** along with one or more configurable variables in stored variables **164.**

The database **156** are computer readable storage mediums in the form of any suitable type of storage apparatus, including direct access storage devices such as hard disk drives, flash systems, floppy disk drives and optical disk drives. The stored alert information for each event comprises: alert content, format and presentation, for a variety of display systems **112,** as well as corrective actions for each event). Information in the databases **156** may be organized or imported during an initialization step (at **1002** of the method **1000** in FIG. 10).

The bus **155** serves to transmit programs, data, status and other information or signals between the various components of the CAVS VSD module **104.** The bus **155** can be any suitable physical or logical means of connecting computer systems and components. This includes, but is not limited to, direct hard-wired connections, fiber optics, infrared and wireless bus technologies. During operation, the CAVS VSD program **162,** stored in the memory **152,** is loaded and executed by the processor **150.**

The interface **154** enables communications within the CAVS VSD module **104,** can include one or more network interfaces to communicate with other systems or components, and can be implemented using any suitable method and apparatus. For example, the interface **154** enables communication from a system driver and/or another computer system. In one embodiment, the interface **154** obtains the various traffic data from the ADS-B source **106** directly. The interface **154** may also include one or more network interfaces to communicate with technicians, and/or one or more storage interfaces to connect to storage apparatuses, such as the database **156.**

During operation, the processor **150** loads and executes one or more programs, algorithms and rules embodied as instructions and applications **160** contained within the memory **152** and, as such, controls the general operation of the CAVS VSD module **104** as well as the CAVS VSD system **102.** In executing the process described herein, such as the method **1000** of FIG. 10, the processor **150** loads and specifically executes the CAVS VSD program **162,** to thereby realize an unconventional technological improvement to both the cockpit display and the analysis/use of ADS-B traffic data. Additionally, the processor **150** is configured to process received inputs (any combination of the user input provided via user input device **110,** and traffic data from one or more of the ADS-B source **106**), reference the database **156** in accordance with the CAVS VSD program **162,** and command and control the display system **112** based thereon.

It will be appreciated that CAVS VSD system **102** may differ from the embodiment depicted in FIG. 1. As a first example, in various embodiments, sources other than the ADS-B source **106** may provide traffic information for processing by the CAVS VSD system **102.** In addition, any combination of the user input device **110,** the transceiver **108,** and the display system **112** can be integrated, for example, as part of an existing FMS or cockpit display in an aircraft. Regardless of the state of integration of these systems, a user may control one or more features of the CAVS VSD system **102** by providing user input via at least the user input device **110.**

FIGS 2-9 are various depictions of images on a display system **112.** Each of the images in FIGS 2-9 comprise a lateral image **202** (provided by the lateral display **120**) and vertical image **204** (provided by the VSD **122**), in accordance with various embodiments. In the vertical images **204,** a change in in altitude over time ("descent rate") may be readily observed. Turning now to FIG. 2, image **200** depicts the ownship **50** on a flight path **51** toward waypoint "BOLES" **52** in both the lateral image **202** and the vertical image **204.** In addition, vertical image **204** depicts ADS-B neighboring traffic (**54, 56,** and **58**) that has met the predetermined data quality criteria. Subsequent to the image **200** being updated with neighbor traffic data, a pilot or user may view image **200** and selectively, from either the lateral image **202** or the vertical image **204,** select neighbor traffic as the target traffic to follow. As used herein, the term selectively implies that, in operation, both the lateral image **202** and the vertical image **204** are continuously and concurrently receptive to pilot selections.

Responsive to the user selection, the CAVS VSD module **102** employs one or more techniques to visually distinguish the user selection from remaining traffic on the vertical image **204** and the lateral image **202.** Referring to FIG. 3, the display system **112** image **300** depicts a user selected traffic **54** on the vertical image **204.** In various embodiments, responsive to the receiving the user selection, the CAVS VSD system **102** renders a highlighted shape **302** surrounding the selected traffic **54.** In FIG. 3, the shape **302** is depicted as rectangular with rounded edges, however, a variety of shapes may be employed. Notably, the visually distinguishing technique used to distinguish the shape **302** does not completely occlude the view of the selected traffic **54,** nor the view of other relevant features on the VSD **122.** Also responsive to the user selected traffic **54,** a text box or menu **304** providing the traffic identification for the selected traffic **54** (i.e., "DAL 5676") and a feature to select CAVS **306** option is displayed.

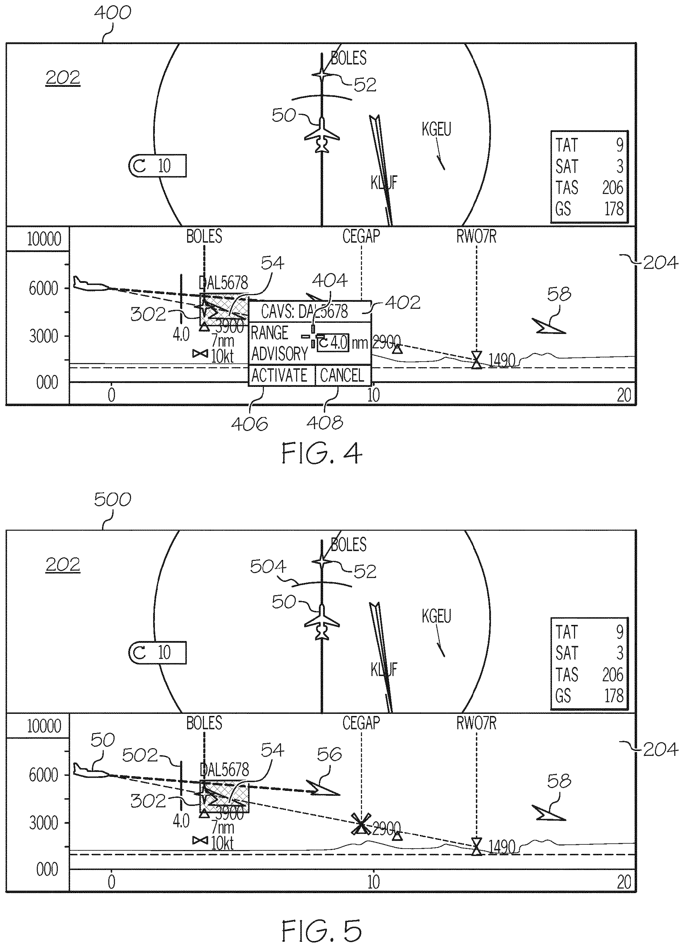

In FIG. 4, responsive to the user selecting the feature CAVS **306** in FIG. 3, the CAVS VSD system **102** displays a CAVS dialogue box **402** proximate to the selected traffic **54,** on the vertical image **204,** that prompts a user to enter a range distance **404.** The range distance **404** offers the pilot an opportunity to visually demark, on both the lateral image **202** and the vertical image **204,** a distance in front of the ownship to pay attention to. The range distance **404** may or may not be the same as the designated separation distance received from ATC. After the traffic to follow is selected and the range distance **404** is entered, the CAVS procedure is set up, and the user may select to activate **406** or deactivate **408** the CAVS procedure in CAVS dialogue box **402.** The features CAVS **306** and CAVS dialogue box **402** are referred to as CAVS application features. Although the CAVS application features are depicted on the VSD **122,** it is understood that they are also supported on the lateral display **120** or other display in the flight deck.

In FIG. 4, the user selected range distance **404** is four nautical miles. Turning to FIG. 5, responsive to the user selected range distance **404,** the CAVS VSD system **102** commands the lateral display **120** and the VSD **122** to concurrently update the lateral image **202** and the vertical image **204** to concurrently depict the user selected range distance. In various embodiments, concurrently depicting the user selected range distance comprises displaying an arc **504** in the lateral image **202** and displaying a vertical line **502** in the vertical image **204.** The vertical line **502** and the arc **504** are each rendered at the selected range distance **404** in front of the ownship (i.e., in the direction that the ownship is traveling on its flight path). Line thicknesses and extent (left or right and above or below the flight path) of the ownship **50** are among the predetermined values that may be stored in stored variables **164.** As the ownship **50** travels forward, the CAVS VSD system **102** continuously updates the images (**202, 204**) such that the vertical line **502** and the arc **504** continue to be displayed at the range distance **404** in front of the ownship **50.**

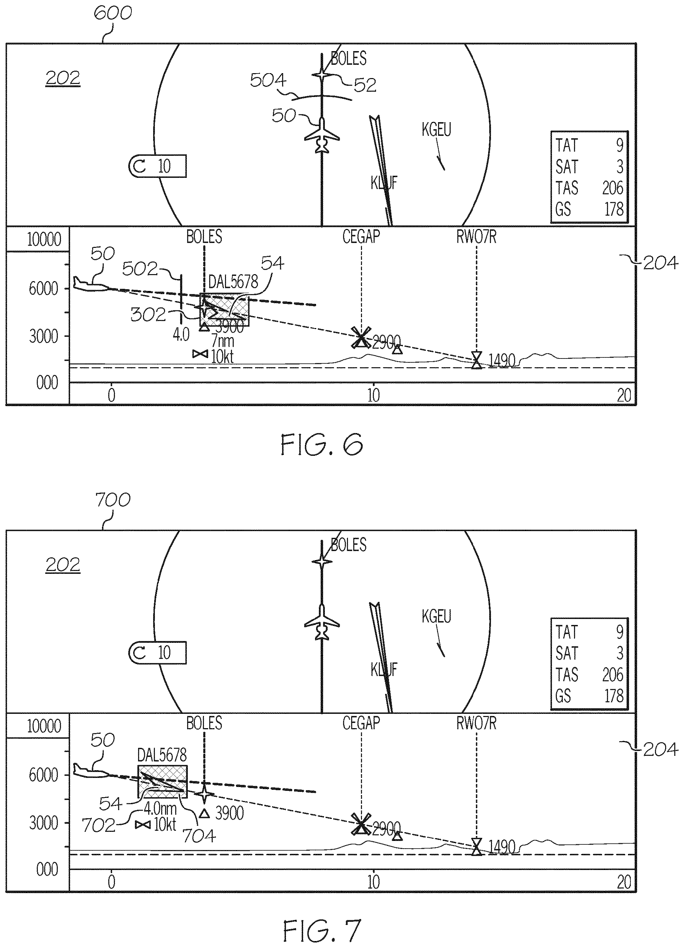

To further encourage/support the pilot's focus on the selected traffic **54,** and minimize the pilot's distraction by other neighboring traffic, the CAVS VSD module **104** may additionally employ visual techniques to minimize or remove the other (unselected) neighbor traffic. In various embodiments, the other neighbor traffic (**56, 58**) may be shaded grey, or may be completely removed from the vertical image **204** on the VSD **122** (as is shown in FIG. 6).

As the ownship **50** travels, the distance between the ownship **50** and the selected traffic **54** may expand or shrink. The CAVS VSD module **104** continuously, and in real time, (i) determines the distance between the ownship **50** and the selected traffic **54,** and (ii) compares that distance to the selected range distance **404.** Based on the comparison, one or more different types of alerts may be generated. The generated alerts may have different levels of priority. For example, the CAVS VSD module **104** may generate a first alert of a first priority when it is determined that the distance between the ownship **50** and the selected traffic **54** is equal to the selected range distance **404;** in various embodiments, the first alert may be an advisory alert. The CAVS VSD module **104** may display the generated advisory alert as one or more visually distinctive changes on the vertical image **204.** For example, with reference to FIG. 7, the shape **302** may be replaced by a shape **704,** having a different background color or shade from shape **302.** Shape **704** may also have a different border color than the border color of shape **302.** In various embodiments, shape **704** may also be a different size and/or a different form (i.e., a diamond shape, or a square) than shape **302.** Regardless of the specific details, it is understood that shape **704** is different enough from shape **302** that it is readily observable, as an alert, to the pilot or a person viewing the displayed image **700.** In addition to visual changes to the shape **704** surrounding the user selected traffic **54,** the CAVS VSD module **104** may command the display system **112** to render the selected range difference **404** proximate to the shape **704** on the vertical image **204,** as is shown at **702** in FIG. 7.

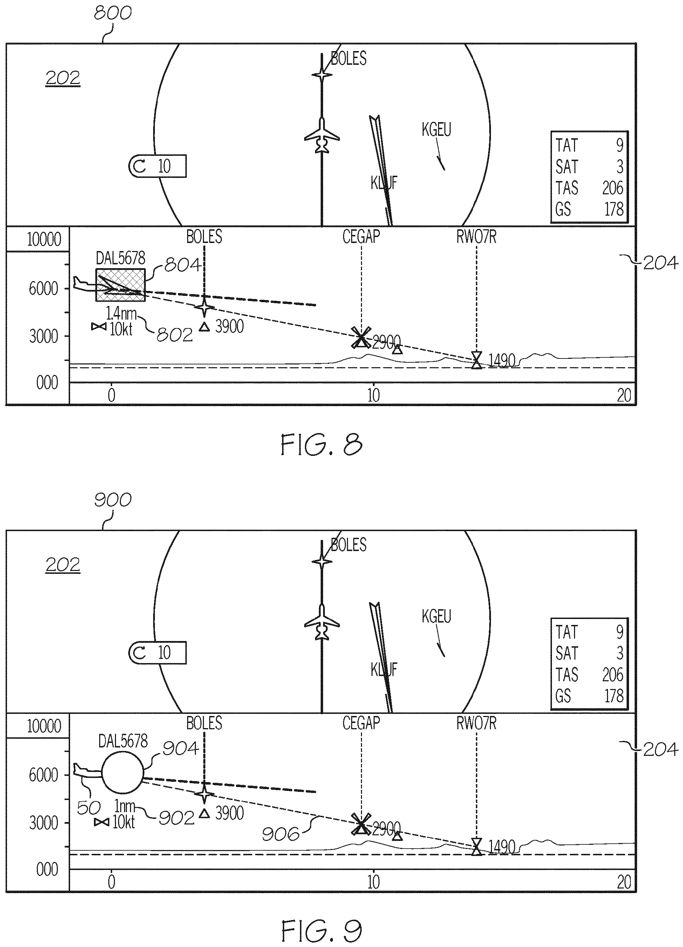

The CAVS VSD module **104** may generate a second alert of a second priority, the second alert being a higher priority than the first alert, and therefore more cautionary, when the CAVS VSD module **104** determines that the distance between the ownship **50** and the selected traffic **54** is less than the selected range distance **404.** As with the advisory alert, the CAVS VSD module **104** may generate the cautionary alert as one or more visually distinctive changes on the vertical image **204.** For example, with reference to FIG. 8, the shape **704** may be replaced by a shape **804,** having a different background color or shade from shape **704.** Shape **804** may also have a different border color than the border color of shape **704.** In various embodiments, shape **804** may also be a different size and/or a different form (i.e., a diamond shape, or a square) than shape **704.** Regardless of the specific details, it is understood that shape **804** is different enough from shape **704** (and shape **302**) that it is noticeable to the pilot or a person viewing the displayed image **800.** In addition to visual changes to the shape **804** surrounding the user selected traffic **54,** the CAVS VSD module **104** may command the display system **112** to render the selected range difference **404** proximate to the shape **804** on the Vertical image **204,** as is shown at 802 in FIG. 8. Due to the cautionary nature of the second alert, the CAVS VSD module **104** may also command the aural alert system **114** to emit an audible sound, coincident with commanding the display system **112** to render the cautionary alert.

In various embodiments, the CAVS VSD module **104** may generate a third alert responsive to determining that the distance between the ownship **50** and the selected traffic **54** has decreased to the point of entering a Traffic Collision and Avoidance System (TCAS) protection zone. FIG. 9 depicts one non-limiting example of a third alert generated by the CAVS VSD module **104** responsive to determining that the ownship has entered the TCAS protection zone. In displayed image **900,** shape **904** is rendered on the vertical image **204** in front of the ownship **50,** on the path **906** of the ownship **50.** The distance at which the TCAS protection zone starts is rendered below the shape **904,** at **902.** However, depending upon where the intruder is with respect to the ownship, the distance at which the TCAS protection zone starts may be in other locations. As with the other shape discussions, the shape **904** may have a different background color or shade, and a different border color than the border color of shape **804** (and **704** and **302**). Shape **904** may also be a different size and/or a different form (i.e., in the embodiment of FIG. 9, shape **904** is a circle) than the previously used shapes. Regardless of the specific details, it is understood that shape **904** is different enough from shape **804,** shape **704,** and shape **302,** that it is noticeable to the pilot or a person viewing the displayed image **900.**

As mentioned, the processor **150** and the CAVS VSD program **162** form a CAVS VSD engine that continually, and in real time, determines the distance between an ownship **50** and a CAVS user selected traffic **54,** and generates alerts in accordance with a set of rules encoded in the CAVS VSD program **162.** Referring now to FIG. 10 and with continued reference to FIGS. 1-9, a flow chart is provided for a method **1000** for CAVS employing a VSD, in accordance with various exemplary embodiments. Method **1000** represents various embodiments of a method associated with the CAVS VSD system **102.** For illustrative purposes, the following description of method **1000** may refer to elements mentioned above in connection with FIG. 1. In practice, portions of method **1000** may be performed by different components of the described system. It should be appreciated that method **1000** may include any number of additional or alternative tasks, the tasks shown in FIG. 10 need not be performed in the illustrated order, and method **1000** may be incorporated into a more comprehensive procedure or method having additional functionality not described in detail herein. Moreover, one or more of the tasks shown in FIG. 10 could be omitted from an embodiment of the method **1000** as long as the intended overall functionality remains intact.

The method starts, and at **1002** the CAVS VSD module **104** is initialized. As mentioned above, initialization may comprise uploading or updating instructions and applications **160,** CAVS VSD program **162,** stored variables **164,** and the various lookup tables stored in the database **156.** Generally, predetermined variables include, for example, an altitude above the ownship and an altitude below the ownship that defines a range line, range variables used for determining neighbor traffic, default range distances for alerts, various shapes and various colors and/or visually distinguishing techniques used for alerts. Default range distances may be based on, for example, the weight category of the CAVS selected target, e.g. 3 miles for a large transport category aircraft. In an embodiment, at **1002,** the method **1000** initializes map data in a database **156.** In some embodiments, CAVS VSD program **162** includes additional instructions and rules for rendering information differently based on type of display device in display system **112.** Initialization at **1002** may also include identifying sources of traffic information and other input wireless signals **105,** and referencing the CAVS VSD program **162** for predetermined data quality criteria that is applied to ADS-B data at **1008.**

At **1004,** neighbor traffic is identified. Identification of neighbor traffic may comprise processing ADS-B data with one or more range variables. In addition, at **1004,** the ADS-B data may be filtered with one or more predetermined data quality criteria, generating therefrom a filtered data subset of the neighbor traffic in the ADS-B data. At **1006,** the method **1000** commands the lateral display **120** and the VSD **122** to concurrently (i) render neighbor traffic, and (ii) render or support CAVS application features. At **1006,** when the filtered data subset is generated and used, only neighbor traffic in the filtered data subset may be rendered on the VSD **122.** In various embodiments, the rendering of the CAVS application features may not be observable until a user selects a neighbor traffic. As used herein, supporting CAVS application features means that, upon selecting a neighbor traffic, in either of the lateral display **120** or the VSD **122,** CAVS application features, such as a prompt to enter a selected range distance, will appear on the respective display (see FIG. 3 and FIG. 4). In other words, at **1006,** when the user selects the traffic **54** on the lateral display **120,** the CAVS menu appears on the lateral display **120,** proximate the neighbor traffic, and when the user selects a traffic **54** on the VSD **122,** the CAVS menu appears on the VSD **122,** proximate the traffic **54** (refer to FIG. 3, menu **304**).

At **1008,** the predetermined data quality criteria are applied to the neighbor traffic data in the received ADS-B data, which creates a filtered subset of the neighbor traffic. As mentioned, the filtered subset of neighbor traffic is referred to as "filtered traffic" for short. The image on the VSD **122** is updated responsive to the filtered traffic; in various embodiments, this means that filtered traffic are displayed in a visually distinguishable manner when compared to the display of the remaining neighbor traffic. Subsequent to viewing the updated image on the VSD **122,** when the user attempts to select a neighbor traffic on the VSD **122,** the CAVS VSD module **104** may limit user selection on the VSD **122** to the filtered traffic, i.e., it only allows selection of neighbor traffic that are members of the filtered traffic subset.

At **1010,** responsive to receiving a user selected target (user selected traffic **54**), the CAVS VSD module **104** concurrently updates the lateral display **120** and the VSD **122** updated as follows. The selected target is rendered in a visually distinguishable manner (see FIGS 3-8) with respect to the remaining displayed traffic on the vertical image **204** and on the lateral image **202.** In addition, a menu **304** allowing for the selection of CAVS application features is displayed proximate to the selected traffic **54** (see, for example, FIG. 3 and FIG. 4). The CAVS dialogue box **402** allows the user to enter a range distance **404.** Once the user's selections are activated (**406**), a newly entered or selected range distance **404** overrides previously selected or default range distances **404.** Responsive to activating (**406**) the CAVS features, the CAVS VSD module **104** concurrently commands the lateral display **120** and the VSD **122** to update the lateral image and the vertical image (i) visually distinguish the user selected traffic **54** from the remaining neighbor traffic, and (ii) depict the user selected range distance **404.** Concurrently depicting the user selected range distance **404** comprises rendering (i) on the lateral image **202,** a symbol such as an arc **504** at a distance in front of the ownship **50** representative of the range distance **404,** and (ii) the vertical image **204,** a symbol such as a vertical line **502,** in front of the ownship **50** at a distance representative of the range distance **404.**

At **1012,** the CAVS VSD module **104** continuously determines the distance between the ownship **50** and the user selected traffic **54.** This determination may be in nautical miles (nm). The determined distance between the ownship **50** and the user selected traffic **54** is continuously compared to the user selected range distance **404** and other relevant variables, such as TCAS distances. Based on the results of the comparison at **1012,** the CAVS VSD module **104** generates alerts at **1014.** As mentioned above, there may be an advisory alert and a cautionary alert, each easily distinguishable from the other by a pilot. In addition, the alerts may comprise an audible component. From **1014,** the method **1000** may end, for example, if the target lands or the method **1000** may return to **1012** for continuously determining the separation distance between the ownship **50** and the user selected traffic **54.**

As is readily appreciated, the above examples of CAVS procedures on a VSD **122** are non-limiting, and many others may be addressed by the CAVS VSD module **104.** Thus, systems and methods directed to improvements in the presentation of CAVS procedures on an aircraft display system over conventional CAVS systems are provided. Specifically, the vertical display not only provides another area of the display system **112** to select and designate neighbor traffic as CAVS targets, but also provides additional relevant visual approach information, such as a vertical distance between the ownship and the target aircraft, descent rates of the ownship and the target and an alerting function for the user-selected CAVS range.

Those of skill in the art will appreciate that the various illustrative logical blocks, modules, circuits, and algorithm steps described in connection with the embodiments disclosed herein may be implemented as electronic hardware, computer software, or combinations of both. Some of the embodiments and implementations are described above in terms of functional and/or logical block components (or modules) and various processing steps. However, it should be appreciated that such block components (or modules) may be realized by any number of hardware, software, and/or firmware components configured to perform the specified functions. To clearly illustrate the interchangeability of hardware and software, various illustrative components, blocks, modules, circuits, and steps have been described above generally in terms of their functionality. Whether such functionality is implemented as hardware or software depends upon the particular application and design constraints imposed on the overall system. Skilled artisans may implement the described functionality in varying ways for each particular application, but such implementation decisions should not be interpreted as causing a departure from the scope of the present invention. For example, an embodiment of a system or a component may employ various integrated circuit components, e.g., memory elements, digital signal processing elements, logic elements, look-up tables, or the like, which may carry out a variety of functions under the control of one or more microprocessors or other control devices. In addition, those skilled in the art will appreciate that embodiments described herein are merely exemplary implementations.

The various illustrative logical blocks, modules, and circuits described in connection with the embodiments disclosed herein may be implemented or performed with a general purpose processor, a digital signal processor (DSP), an application specific integrated circuit (ASIC), a field programmable gate array (FPGA) or other programmable logic device, discrete gate or transistor logic, discrete hardware components, or any combination thereof designed to perform the functions described herein. A general-purpose processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The steps of a method or algorithm described in connection with the embodiments disclosed herein may be embodied directly in hardware, in a software module executed by a controller or processor, or in a combination of the two. A software module may reside in RAM memory, flash memory, ROM memory, EPROM memory, EEPROM memory, registers, hard disk, a removable disk, a CD-ROM, or any other form of storage medium known in the art. An exemplary storage medium is coupled to the processor such that the processor can read information from, and write information to, the storage medium. In the alternative, the storage medium may be integral to the processor. The processor and the storage medium may reside in an ASIC.

In this document, relational terms such as first and second, and the like may be used solely to distinguish one entity or action from another entity or action without necessarily requiring or implying any actual such relationship or order between such entities or actions. Numerical ordinals such as "first," "second," "third," etc. simply denote different singles of a plurality and do not imply any order or sequence unless specifically defined by the claim language. The sequence of the text in any of the claims does not imply that process steps must be performed in a temporal or logical order according to such sequence unless it is specifically defined by the language of the claim. The process steps may be interchanged in any order without departing from the scope of the invention as long as such an interchange does not contradict the claim language and is not logically nonsensical.

Furthermore, depending on the context, words such as "connect" or "coupled to" used in describing a relationship between different elements do not imply that a direct physical connection must be made between these elements. For example, two elements may be connected to each other physically, electronically, logically, or in any other manner, through one or more additional elements.

While at least one exemplary embodiment has been presented in the foregoing detailed description of the invention, it should be appreciated that a vast number of variations exist. It should also be appreciated that the exemplary embodiment or exemplary embodiments are only examples, and are not intended to limit the scope, applicability, or configuration of the invention in any way. Rather, the foregoing detailed description will provide those skilled in the art with a convenient road map for implementing an exemplary embodiment of the invention. It being understood that various changes may be made in the function and arrangement of elements described in an exemplary embodiment without departing from the scope of the invention as set forth in the appended claims. It will also be appreciated that while the depicted exemplary embodiment is described in the context of a fully functioning computer system, those skilled in the art will recognize that the mechanisms of the present disclosure are capable of being distributed as a program product with one or more types of non-transitory computer-readable signal bearing media used to store the program and the instructions thereof and carry out the distribution thereof, such as a non-transitory computer readable medium bearing the program **136** and containing computer instructions stored therein for causing a computer processor (such as the processor **150**) to perform and execute the program **136.** Such a program product may take a variety of forms, and the present disclosure applies equally regardless of the particular type of computer-readable signal bearing media used to carry out the distribution. Examples of signal bearing media include: recordable media such as floppy disks, hard drives, memory cards and optical disks, and transmission media such as digital and analog communication links. It will be appreciated that cloud-based storage and/or other techniques may also be utilized in certain embodiments.

## Claims

1. A Cockpit Display of Traffic Information (CDTI) assisted Visual Separation (CAVS) System comprising:
a lateral display;
a vertical situation display (VSD); and
a control module coupled to the lateral display and the VSD, the control module comprising a processor and a memory device, and configured to:
(a) identify neighbor traffic based on traffic data received from an automatic dependent surveillance broadcast (ADS-B),
(b) command the lateral display to render a lateral image and the VSD to render a vertical image, each image comprising the neighbor traffic and features associated with a cockpit display of traffic information (CDTI) Assisted Visual Separation (CAVS) application,
(c) receive a user selected traffic subsequent to (b), and,
(d) responsive to (c), command the lateral display and the VSD to concurrently,
update the lateral image and the vertical image to
(i) visually distinguish the user selected traffic from remaining neighbor traffic, and
(ii) depict a user selected range distance.

2. The CAVS system of claim 1, wherein the control module is further configured to filter the neighbor traffic with a predetermined data quality criteria and command the VSD to render filtered traffic in a visually distinct manner with respect to remaining neighbor traffic in the VSD.

3. The CAVS system of claim 2, wherein the control module is further configured to limit user selection on the VSD to filtered traffic.

4. The CAVS system of claim 3, wherein the control module is further configured to, responsive to (c), remove unselected neighbor traffic from the VSD.

5. The CAVS system of claim 4, wherein depicting a user selected range distance comprises rendering, on the lateral image, an arc at a distance in front of the ownship representative of the range distance, and rendering, on the vertical image, a vertical line in front of the ownship at a distance representative of the range distance.

6. A method for Cockpit Display of Traffic Information (CDTI) assisted Visual Separation (CAVS), comprising:
at a control module,
(a) identifying neighbor traffic;
(b) filtering the neighbor traffic with a predetermined data quality criterion;
(c) commanding a vertical situation display (VSD) to render filtered traffic in a visually distinct manner with respect to remaining neighbor traffic in a vertical image;
(d) concurrently with (c), commanding a lateral display to render neighbor traffic in a lateral image;
(e) receiving a user selected traffic from the VSD subsequent to (d); and,
(f) responsive to (e), commanding the lateral display and the VSD to concurrently
visually distinguish the user selected traffic from remaining neighbor traffic.

7. The method of claim 6, further comprising:
responsive to (e), commanding the lateral display and the VSD to concurrently depict a user selected range distance; and
wherein commanding the lateral display and the VSD to concurrently visually distinguish the user selected traffic from remaining neighbor traffic comprises rendering a highlighted shape surrounding the selected traffic.

8. The method of claim 7, further comprising:
limiting user selection on the VSD to filtered traffic; and
responsive to (e), continuously, and in real time, determining a distance between an ownship and the selected traffic, and comparing the determined distance between the ownship and the selected traffic to the user selected range distance.

9. The method of claim 8, further comprising generating an alert based on the comparison of the determined distance between the ownship and the selected traffic to the user selected range distance.
